# EUROPEAN PATENT APPLICATION

(11) **EP 2 500 529 A2**
(43) Date of publication of application: **19.09.2012**
(21) Application number: 12155882.9
(22) Date of filing: 17.02.2012
(51) Int. Cl.: F01D 25/28, F01D 9/04, F01D 5/30

(54) **Method and apparatus for removing an aerofoil structure from a casing section of a rotary machine**

(30) Priority: 15.03.2011 GB 201104295
(71) Applicant: Rolls-Royce plc, London SW1E 6AT (GB)
(72) Inventor: Bartlam, Mark, Stafford, Staffordshire ST16 3PQ (GB); Bitondo, Donato, Derby, Derbyshire DE22 3UU (GB); Leon de Paz, Marcel, 10115 Berlin (DE); MacRae, Peter, Edinburgh, EH9 2BJ (GB)
(74) Representative: Little, Thomas Andrew

(57) **Abstract**

Method and apparatus for removing an aerofoil structure (64) from an arcuate casing section (2) of a rotary machine, the apparatus comprising:
a frame (18) which supports or is supported on the casing section (2);
a reaction arm (46) which is rotatably mounted in the frame (18) about an axis parallel to a rotational axis of the arcuate casing section (2), a free end of the reaction arm (46) being adapted to apply a force to the aerofoil structure (64); and a torque multiplier (42) acting between the reaction arm (46) and the frame (18), the torque multiplier (42) being operable to apply the force to the aerofoil structure (64) in a substantially tangential direction of the arcuate casing section (2).

## Description

This invention relates to a method and apparatus for removing aerofoil structures such as stator vanes from an arcuate casing section of a rotary machine, such as a gas turbine engine.

When any compressor module, e.g. an intermediate pressure compressor (IPC) module, of a gas turbine engine comes in for overhaul, it is necessary to completely strip the module to piece part level. This includes the removal of stator vanes from the compressor module cases. Currently stator vanes are removed by using a penetrating lubricant, hammer and a plastic or brass drift, such as a Tufnol drift. The drift is used to lever apart the vanes, so that the drift can be placed against a face of the vane and can then be struck by the hammer to drive the vane around the casing section until it can slide out of the open end of the casing section. Where and how the hammer and drift are used depends on the individual technique of the fitter and the particular vanes being removed. There is considerable difference between the techniques used by fitters even on the same engine, and the whole process is very time-consuming taking up to 15 man hours to remove all the vanes from each half of an RB211 engine IPC case, for example.

US 4,096,614 describes a machine to remove stator vanes from axial compressors. The machine works on stator vanes which are cantilevered (i.e. attached only to the casing and not using a shroud) and consists of a cradle to hold the casing on a shaft positioned on the engine axis. The shaft has a handle at one end and an arm which extends between the vanes. An annular collar is slid over the free end of the vane which is to be removed. When the handle is swung, the arm impacts against the collar, thereby driving out the vane.

Applying discrete impacts to the vanes can cause damage to the vanes and can also result in the vanes tipping sideways and jamming, since it is very hard to apply a consistent impact. Furthermore if the handle of the machine described in US 4,096,614 slips out of the fitter's hands, it can swing around with considerable force and cause injury to the fitter.

Although the machine described in US 4,096,614 provides advantages over the hammer and drift method, it cannot be used for shrouded vanes, because it relies on the use of a soft metal collar or insert which fits over the vane from one end and is slid down the length of the vane to the base section. This arrangement can be used where the vane is supported at one end only, but not where the vane is supported at both ends.

In US 4,096,614, the vane removal forces push the casing away from the frame and up into the air. Between some vanes, in the casing groove, are small metal parts called spacers. Any oil, spacer, vane or piece of silicone rubber could be caught and then suddenly released by the apparatus described in US 4,096,614, resulting in shrapnel flying upwards towards lights, machines, or personnel presenting a safety risk.

The collar of US 4,096,614 fits over the vane. The position of this collar is predetermined and so cannot be adjusted to deal with vanes which are non-uniform. In other words, gravity will tend to position the collar at the root of the vane, so will not easily remove a vane which requires the force applied anywhere else.

Since the collar of US 4,096,614 must conform closely to the aerofoil surface it is time consuming to design and manufacture. Therefore, it is difficult quickly to design and test new insert designs.

Removing shrouded vanes presents the following additional difficulties which cannot be addressed by the apparatus of US 4,096,614:
(1) The shroud has a groove which, during build, allows it to be threaded over the feet of the vanes. The shroud has the job of preventing over tip leakage and stabilising the vanes to prevent them moving. To prevent serious vibration, room temperature vulcanising silicone rubber (RTV) is pumped into the cavity after the shroud has been threaded onto the vanes. When the time comes to strip the casing down, after extended use, the RTV sticks the vanes and shroud together. This makes the task very difficult and often prevents more than one vane being removed at a time.
(2) Because the feet of the vane are curved to fit inside the curved tracks of the casing and shroud, it is easy to jam them while trying to slide them out. Problems often occur due to rotation about either end, or due to twisting. Unless the vane is kept really square to the groove with the most resistance, it will not be removed.
(3) Another method of reducing on-wing vibration is to place steel liners along the inside of the grooves on the casing and sometimes the shroud. During use the vanes move very slightly, digging into, compressing and indenting the liners. They fit snugly into these indents which make them extremely difficult to slide out. The liners cannot be removed until all vanes are removed.
(4) The vanes are manufactured to an acceptable tolerance, which results in some degree of variation in some of the dimensions of the vanes. Some vanes at the limits of tolerance will be looser than normal or tighter than normal, increasing the variability of the task of removing them. Effectively, every vane is different, so there is no uniformity between the vanes in terms of the best position to apply the removing force or how to grip the vane.
(5) The use of hammer action in US 4,096,614 can cause damage to the vanes, shroud and/or casing and can cause the vanes to jam.

As is clear, trying to design an economical solution which removes all of these obstacles without increasing the risk of damage to the vanes, casing, shroud or fitter, is a difficult task. This is why the hammer and drift method of removing the vanes has been in extensive use for the past thirty years, and attempts to create a better solution have failed.

According to a first aspect of the present invention there is provided an apparatus for removing an aerofoil structure from an arcuate casing section of a rotary machine, the apparatus comprising:
a frame which supports or is supported on the arcuate casing section;
a reaction arm which is mounted in the frame about an axis parallel to a rotational axis of the arcuate casing section, a free end of the reaction arm being adapted to apply a force to the aerofoil structure; and
a torque multiplier acting between the reaction arm and the arcuate casing section, the torque multiplier being operable to apply the force to the aerofoil structure in a substantially tangential direction of the arcuate casing section.

Drive means may be provided for powering the torque multiplier. The drive means may for example comprise an electric motor or a compressed air actuator or a hydraulic actuator.

The apparatus may further comprise a torque limiter for limiting the torque which can be applied to the aerofoil structure by the torque multiplier.

The arcuate casing section may pivot in the frame.

The frame may be adapted to support the arcuate casing section such that a concave side of the arcuate casing section faces to one side or downwardly during removal of an aerofoil structure.

The reaction arm may be rotatably mounted in the frame about an axis which is coincident with a rotational axis of the arcuate casing section.

The reaction arm may be mounted on a shaft which is itself rotatably mounted in the frame. The shaft may taper from one end to the other, so that the reaction arm length does not have to change if the diameter of the casing is different at successive rows of vanes. For example, the shaft may have the form of a conical drum

The shaft may be provided with notches or spring-loaded pins to locate the reaction arm accurately at the correct distance along the rotational axis of the arcuate casing section.

The shaft may be selectively connectable to the torque multiplier, so that the torque multiplier can be disengaged and the shaft can be swung freely to speed up winding back and removal of aerofoil structures which are loose or otherwise easy to remove.

There may be a ratchet mechanism between the shaft and the torque multiplier, so that the shaft can be wound back quickly.

There may be an adjustable gear mechanism between the shaft and the torque multiplier, so that the torque multiplier may be operated at different gear ratios.

The shaft may be of any shape. For example, it may be triangular in cross section. Alternatively, it may be cylindrical. The shaft may be mounted in the frame by any appropriate means. For example, it may be mounted by means of bearings or bushes.

The apparatus may further comprise an insert which is located between the reaction arm and the aerofoil structure.

The insert may be shaped to conform to the contours of the front or back of the aerofoil structure. The insert may have a textured surface.

The insert may comprise a hook which hooks over the aerofoil structure and engages the aerofoil structure on the side of the aerofoil structure opposite to the reaction arm.

The insert may be made of a flexible material such as elastomeric or plastic material.

The insert may be fixed to the reaction arm. For example, it may be permanently attached to the reaction arm.

A plurality of inserts, each of a different shape, may be fitted to the reaction arm, so that an appropriate insert shape can be selected and moved into an operative position to engage the particular aerofoil structure to be removed.

The insert may be adapted to engage more than one aerofoil structure at a time, on the same stage, more than one stage, or across several aerofoil structures and stages.

Means may be provided to clamp the insert onto a respective aerofoil structure. For example, the insert may be provided with a clamping member which engages around the aerofoil structure.

The insert may be adapted to engage a shroud and/or a spacer, rather than or as well as an aerofoil structure.

A plurality of inserts of different shapes may be provided, each insert being colour coded, to identify which shape and size of aerofoil structure it is intended to engage.

The reaction arm may be bifurcated.

The reaction arm may comprise two or more separate elongate elements which are independently rotatable about the rotational axis of the arcuate casing section.

The length of the reaction arm may be adjustable.

The reaction arm may be hinged, to allow the insert to be attached permanently to the reaction arm.

The reaction arm may be provided with a first arm portion and/or a bifurcated arm portion which engages the insert. The first arm portion and bifurcated arm portion may have different cross sectional shapes. For example, one may be cylindrical and the other may be square in cross section. The first arm portion and bifurcated arm portion may be made from different materials.

The reaction arm may extend on one side only of the aerofoil structure.

The reaction arm may be curved, bent or otherwise shaped to support more complex insert designs.

The reaction arm may be adapted to engage inserts across several stages simultaneously. For example, it may have a plurality of support arms, each support arm or each pair of support arms engaging a separate aerofoil structure.

Bolts may be provided to lock the reaction arm in position (axially along the shaft and radially to set the length). The bolts may engage wing nuts or clamps or the bolts may be replaced any other locking/clamping device.

The reaction arm may be mounted on a bush or bearing, to allow it to run smoothly along the shaft when it is repositioned.

An aerofoil structure catcher may be provided in the frame to catch the aerofoil structures as they are ejected from the arcuate casing section. The aerofoil structure catcher may comprise a wire net, or a plastic net, suspended from the frame. The wire net, or plastic net, may be suspended from corner members of the frame.

The frame may be floor standing and may comprise support blocks which are fixed to the frame and to the respective ends of the casing section. The torque multiplier may be fixed to the frame at a position substantially equidistant between the support blocks.

A tray may be provided beneath the aerofoil structure catcher, into which excess lubricant which drips from the casing section and/or the aerofoil structure can be captured and if appropriate re-used.

According to another aspect of the present invention there is an provided apparatus for removing an aerofoil structure from an arcuate casing section of a rotary machine, the apparatus comprising:
a frame which supports or is supported on the arcuate casing section;
a reaction arm which is rotatably mounted in the frame about an axis parallel to a rotational axis of the arcuate casing section, a free end of the reaction arm being adapted to apply a force to the aerofoil structure, and
means for applying the force to the aerofoil structure via the reaction arm, the frame being adapted to support the arcuate casing section such that a concave side of the arcuate casing section faces to one side or downwardly in operation of the apparatus.

With the arcuate casing section oriented in this way, if an aerofoil section, spacer or other component is ejected from the arcuate casing section with some force, it will be directed to the side or downwardly, away from the operator. It will also be captured, rather than damaging a ceiling structure or lights and being projected across a work space in a potentially dangerous manner.

According to another aspect of the present invention there is provided an apparatus for removing an aerofoil structure from an arcuate casing section of a rotary machine, the apparatus comprising:
a frame which supports or is supported on the arcuate casing section,
a reaction arm which is rotatably mounted in the frame about an axis parallel to a rotational axis of the arcuate casing section, a free end of the reaction arm being adapted to apply a force to the aerofoil structure;
a torque applicator for applying the force to the aerofoil structure via the reaction arm; and
an insert which is located adjacent to the reaction arm and one face only of the aerofoil structure.

The insert may engage in and/or be fixed to the reaction arm.

In a preferred arrangement, the insert is inserted between the reaction arm and the aerofoil structure from one side of the insert.

The insert may be shaped to engage at least a portion of one face only of the aerofoil structure.

The use of an insert between the reaction arm and the aerofoil structure spreads the load applied to the aerofoil structure more evenly and/or extensively over the face of the aerofoil structure.

According to another aspect of the present invention there is provided a method of removing an aerofoil structure from an arcuate casing section of a rotary machine, the method comprising the steps of:
placing a free end of a reaction arm against a face of the aerofoil structure; and
applying a substantially continuous force to the reaction arm, and thereby to the aerofoil structure by means of a torque multiplier, the force being applied to the face of the aerofoil structure in a substantially circumferential direction of the arcuate casing section.

The method may further comprise interposing an insert between the reaction arm and the face of the aerofoil structure.

The method may further comprise catching the aerofoil structure in a component catcher situated adjacent the arcuate casing section when the aerofoil structure is expelled from the arcuate casing section.

In embodiments according to the present invention, the disassembly forces push the casing towards the frame and down onto the ground, so the present invention works with gravity, rather than against it.

Using a device in accordance with the present invention, the casing section can be positioned at a comfortable working height which makes it safer and easier to use.

The inserts in accordance with the present invention can be redesigned and iterated simply, easily, and cheaply. As a fitter gains more experience with this apparatus, he or she will understand more regarding how the insert could be improved. A new insert could be manufactured and tested cheaply without having to change any other part of the apparatus itself. Since the collar of US 4,096,614 must conform closely to the aerofoil surface it would be more difficult to test new insert designs, compared to the present invention.

A device in accordance with the present invention is able to work with vanes which are held at both radial ends of the vanes.

The use of hammer action can cause damage to the vanes, shroud and/or casing and can cause the vanes to jam, whereas the use of a torque multiplier in accordance with the present invention ensures that a substantially continuous, easily controlled force is applied to the vanes, rather than a series of variable impacts.

Using the hammer and drift method it can take 30 man hours to strip an IPC casing, whereas using a method in accordance with the present invention will take closer to 7 man hours to achieve the same result. The cost saving is therefore very large, and there is clear potential for automation.

For a better understanding of the present invention, and to show how it may be carried into effect, reference will now be made, by way of example to accompanying drawings, in which:
Figure 1 is a perspective view of an apparatus for removing an aerofoil structure from an arcuate casing section of a rotary machine; and
Figure 2 is an enlarged view of a reaction arm applying a force by means of an insert to a face of an aerofoil structure. For ease of reference, the outer casing has been removed from the drawing.

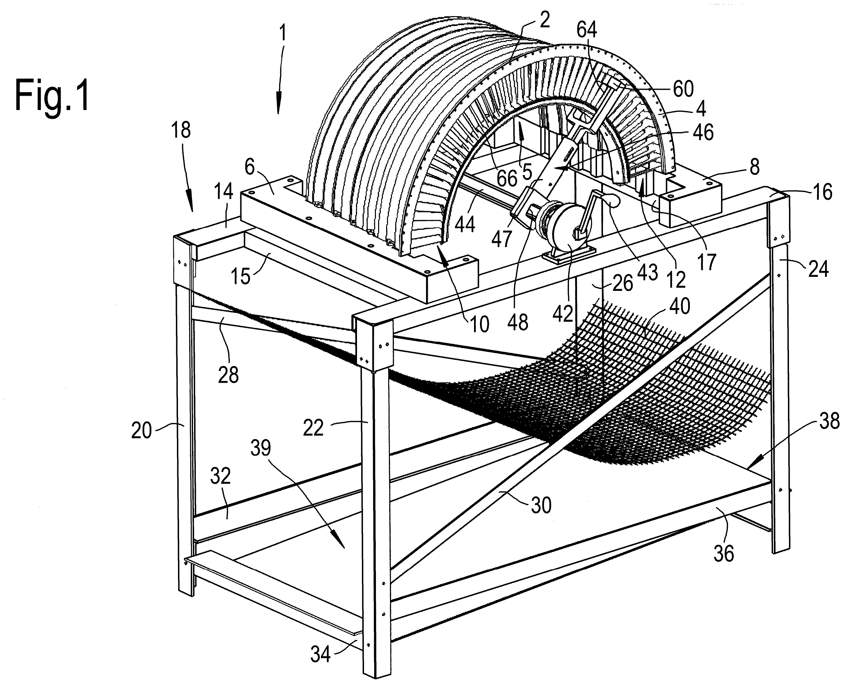

When any compressor module, e.g. an intermediate pressure compressor (IPC) module, comes in for overhaul, it is necessary to completely strip the module to piece part level. This includes the removal of all stator vanes from the IPC case. An IPC module can be split into two casing sections 2 by removing the bolts which hold them together. Figure 1 illustrates a jig 1 for stripping a casing section 2. The jig 1 has the general form of a bench on which the casing section 2 is placed in an inverted orientation, such that its concave side 5 faces downwardly.

The casing section 2 is bolted by the free ends 10, 12 of its outer casing 4 to respective support blocks 6, 8. The support blocks 6, 8 are themselves bolted to upper frame rails 14, 15, 16, 17 of a frame 18 of the jig 1. As mentioned above, the jig has the general form of a bench having four legs 20, 22, 24, 26 and appropriate cross-bracing members 28, 30 and lower frame rails 32, 34, 36, 38. An adjustment mechanism (not shown) may be provided to adjust the working height of the jig 1.

A vane catcher 40, comprising a rectangular piece of wire net, or wire mesh, supported at its corners by the legs 20, 22, 24, 26, is attached to the frame 18 beneath the upper frame rails 14, 16 in a curved configuration to assist in catching aerofoil structures (comprising vanes 64) expelled from the casing section 2. In an alternative arrangement, the vane catcher 40 could comprise a ball pool (not shown), or the vanes 64 could drop directly into a cleaning bath (not shown) below the jig 1.

A lubricant recycling tray 41 is fixed to the lower frame rails 32, 34, 36, 38 beneath the vane catcher 40, to catch lubricant which falls from the casing section 2 or expelled vanes 64. A pump and pipework (not shown) could be provided, so that lubricant collected in the tray could be reused.

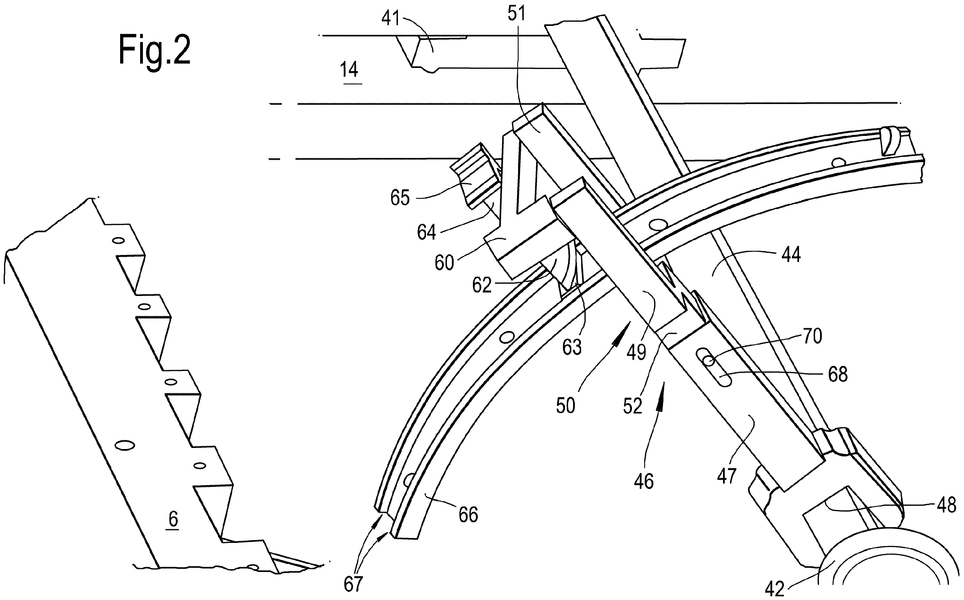

A torque multiplier 42 is bolted to the upper frame rail 16 and is operated by a handle 43 which when turned rotates a drive shaft 44 which is of substantially square cross-section and on which is mounted a reaction arm 46. The end of the shaft 44 opposite to the torque multiplier 42 is supported in a bearing block 41 (see Figure 2). The shaft 44 is coincident with an axis of rotation of the casing section 2 such that the reaction arm 46 remains at the same spacing from the casing section 2 as the shaft 44 rotates.

The reaction arm 46 comprises a first arm portion 47 provided with a square opening 48 which fits over the shaft 44 with some play, so that the reaction arm 46 can slide along the shaft 44 to a desired axial position. Means may be provided to lock the reaction arm 46 relative to the shaft 44. For example, a bolt (not shown) may be fitted into a threaded bore formed through a base of the first arm portion and extending into the opening 48. When the bolt is screwed into the threaded bore, it engages the shaft 44 and fixes the reaction arm 46 relative to the shaft 44. In another embodiment (not illustrated) the shaft 44 may be provided with a series of notches or holes into which an end of the bolt may engage. The position of the notches or holes along the shaft 44 aid in aligning the reaction arm 46 relative to the casing section 2.

Referring to Figure 2, in which the outer casing 4 has been removed for the sake of clarity, the first arm portion 47 of the reaction arm 46 is hollow and is adapted to receive a bifurcated arm portion 50 having a shaft 52 which extends into the hollow interior of the first arm portion 47. The shaft 52 of the bifurcated arm portion 50 carries a pair of support arms 49, 51 which extend parallel to one another and are connected at one end by a web from which the shaft 52 of the bifurcated arm portion 50 extends. An insert 60 is connected between the support arms 49, 51 and engages a face 62 of the vane 64. The vane 64 is one of a plurality of vanes which is mounted in the casing section 2 between the outer casing 4 and an inner shroud 66. Opposite ends of the vane 64 are provided with respective feet 63, 65 which engage in pairs of oppositely directed recesses 67 formed in the outer casing 4 and shroud 66. The vane 64 is illustrated in Figure 2 with one foot 63 located in the oppositely directed recesses 67 in the shroud 66 and the other foot 65 exposed (although in reality it would be engaged in the corresponding pair of recesses formed in the outer casing 4). Thus, the vane 64 is captive by engagement of the feet 63, 65 with the recesses 67 and so cannot be pulled directly from a side of the casing section 2, but instead must be slid circumferentially along the recesses 67 in the outer casing 4 and shroud 66 until it can be expelled from one of the free ends, 10, 12 of the casing section 2.

A first row of vanes 64 is illustrated in Figure 1, but a plurality of rows of vanes are present in the casing section 2, spaced in an axial direction along its length. The dimensions of the vanes may differ from one row to the next.

It will be appreciated that by applying a force to the face 62 of the vane 64 the foot 63 can be slid along the pair of oppositely directed recesses in the shroud 66, thereby moving the vane 64 bodily towards a free end 10, 12 of the casing section 2. In order to move the feet 63, 65 smoothly along the recesses, the position at which the insert 60 applies force to the face 62 of the vane 64 is crucial. Consequently, the position of the bifurcated arm portion 50 and hence the insert 60 relative to the first arm portion 47 is adjustable by adjusting the degree of insertion of the shaft 52 of the bifurcated arm portion 50 in the hollow interior of the first arm portion 47. An elongate opening 68 is formed in a side wall of the first arm portion 47 and is engaged by a pin 70 which extends through the shaft 52 of the bifurcated arm portion 50. Engagement of the pin 70 with opposite ends of the elongate opening 68 limits the range of movement of the bifurcated arm portion 50 relative to the first arm portion 47. Once the desired position of the insert 60 relative to the vane 64 has been achieved, the relative position of the bifurcated arm portion 50 may be fixed relative to the first arm portion 47, for example, by means of tightening a bolt in one of a plurality of openings formed through the bifurcated arm portion 50 and first arm portion 47. In an alternative embodiment, a plurality of notches and a spring-loaded pin may be used to accurately position the bifurcated arm portion 50 relative to the first arm portion 47.

In use of the device, the bolts joining the respective half casing sections 2 on an intermediate pressure compressor (IPC) module are undone, and a single half casing section 2 is lifted away and lubricated along the recesses 67 of the outer casing 4 and shroud 66. The casing section 2 is then inverted over the jig 1, such that its free ends 10, 12 are aligned with the support blocks 6, 8 of the frame 18, and is bolted to the support blocks 6, 8 through the bolt openings already formed in the casing section 2 and in the support block 6, 8. The casing section 2 is aligned with the frame 18, such that the shaft 44 connected to the torque multiplier 42 at one end, and connected to the bearing block 41 at the other end, lies along the rotational axis of the casing section 2. At the same time, the reaction arm 46 is slid along the shaft 44 into the appropriate position such that the support arms 49, 51 of the bifurcated arm portion 50 extend on opposite sides of a vane 64 which is to be removed. This vane 64 may be adjacent to the free end 12 of the casing section 2 or may be further around the circumference of the casing section 2, such that as the vane 64 is removed, all of the other vanes between it and the free end 12 of the casing section are also removed. In the embodiment illustrated in Figure 1, a plurality of vanes 64 are to be removed in a single operation.

With the reaction arm 46 correctly aligned on the shaft 44, it is fixed in position by tightening the bolt (not shown) which engages the shaft 44 through a base of the first arm portion 47. A determination is then made as to the desired region of the vane 64 to which force should be applied. A determination is also made as to what shape of insert 60 is appropriate to correspond to the contour of the surface 62 of the vane 64 which is to be removed. The appropriate insert 60 is then attached to the support arms 49, 51 of the bifurcated arm portion 50. In one embodiment, the insert 60 is pivotally connected to one of the support arms 49, and is swung into position to engage the vane 64 and is then fixed or engaged against the other support arm 51. In another embodiment, the insert clips or bolts to the support arms 49, 51. In another embodiment, the insert simply rests against the support arms 49, 51. To assist in alignment, the support arms 49, 51 may be provided with appropriate recesses into which the insert 60 engages, or vice versa.

Having aligned the insert 60 with the support arms 49, 51, the relative position of the bifurcated arm portion 50 and first arm portion 47 is adjusted to achieve the correct position of the insert 60 along the length of the vane 64. The relative position of the bifurcated arm portion 50 and first arm portion 47 is then fixed by means of a bolted engagement or pin and detent arrangement described above. With alignment complete, the operator winds the handle 43 to cause a torque, multiplied by the torque multiplier 42, to be applied to the shaft 44 and hence to the first arm portion 47, bifurcated arm portion 50, insert 60 and vane 64. This force slides the feet 63, 65 of the vane 64 along the recesses in the outer casing 4 and shroud 66, and as the vane 64 engages the next vane in the row, all of the vanes between the vane 64 and the free end 12 of the casing section 2 are ejected from the free end of the casing section 12 in turn, and are caught in the vane catcher 40. Any excess lubricant which drips from the recesses 67 in the outer casing 4 or shroud 66 or from the inserts 64 drips into the oil recycling tray from where it can be filtered and re-used.

Once the vane 64 has been ejected, the handle 43 can be wound in the opposite direction to align the insert 60 with the appropriate next vane or group of vanes to be removed from the casing section 2. The process is then repeated to eject this new vane, and any vanes in front of it, from the free end 12 of the casing section 2 until all of the vanes have been removed. At this point, the bolt holding the reaction arm 46 relative to the shaft 44 can be undone, so that the reaction arm 46 can be slid along the shaft 44 away from the torque multiplier 42 until the arms 49, 51 extend on opposite sides of the next row of vanes, and again the process is repeated to remove those vanes from the casing section. If the size and/or orientation of the next row of vanes is different from the first row of vanes, it may be necessary to adjust the position of the insert relative to the reaction arm 46, use a different insert, reverse the insert or engage an alternative portion of the insert 60 in order to better apply force to the next row of vanes.

The term "aerofoil structure" as used in this specification is intended to be construed broadly and may for example include a vane or blade, or any other discrete component which can only be removed from a rotary machine by sliding it in a circumferential direction of the rotary machine.

The same principle could be used to remove stator vanes from any compressor or turbine on any engine. It could also be applied to non-gas turbines, e.g. steam or water turbines. Different support blocks would be needed to match the holes on the casing flanges and position the shaft at the engine axis. The apparatus would work even with casings that were not semi-circular as long as the support blocks were shaped to position the shaft correctly.

In an alternative embodiment, not illustrated, the casing section 2 could be rotated around the shaft 44, rather than the other way round. In this embodiment, the reaction arm 46 could be fixed in position and the torque multiplier 42 could rotate the casing section 2 relative to the reaction arm 46.

The jig 1 could be adapted for use with different rotary machines, such as a part of a compressor. For example, the support blocks 6,8 could be adjustable for different engines. Also the jig 1 may be adapted to better locate a casing section 2. For example, there could be straps over the top of the casing to hold it more firmly in position, and a profile of a fixing flange of a casing section 2 could be machined into the top of the support blocks 6,8 to hold it more securely.

The jig 1 could be mounted on wheels or castors (not shown), so that it can be moved by hand.

There could be a conveyor (not shown) below the jig 1 to take the vanes 64 directly to an inspection station.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

## Claims

1. Apparatus (1) for removing an aerofoil structure (64) from an arcuate casing section (2) of a rotary machine, the apparatus comprising:
a frame (18) which supports or is supported on the arcuate casing section (2);
a reaction arm (46) which is mounted in the frame (18) about an axis parallel to a rotational axis of the arcuate casing section (2), a free end of the reaction arm (46) being adapted to apply a force to the aerofoil structure (64); **characterised by**
a torque multiplier (42) acting between the reaction arm (46) and the arcuate casing section (2), the torque multiplier (42) being operable to apply the force to the aerofoil structure (64) in a substantially circumferential direction of the arcuate casing section (2).

2. Apparatus as claimed in claim 1, further comprising drive means for powering the torque multiplier.

3. Apparatus as claimed in claim 2, wherein the drive means comprises an electric motor or a compressed air actuator or a hydraulic actuator.

4. Apparatus as claimed in any preceding claim, further comprising a torque limiter for limiting the torque which can be applied to the aerofoil structure (64) by the torque multiplier (42).

5. Apparatus as claimed in any preceding claim, wherein the arcuate casing section (2) is adapted to pivot in the frame (18).

6. Apparatus as claimed in any preceding claim, wherein the frame (18) is adapted to support the arcuate casing section (2) such that a concave side of the arcuate casing section (2) faces to one side or downwardly during removal of an aerofoil structure (64).

7. Apparatus as claimed in any preceding claim, wherein the reaction arm (46) is rotatably mounted in the frame (18) about an axis which is coincident with a rotational axis of the arcuate casing section (2).

8. Apparatus as claimed in any preceding claim, wherein the reaction arm (46) is bifurcated (50).

9. Apparatus as claimed in any preceding claim, wherein the length of the reaction arm (46) is adjustable.

10. Apparatus as claimed in any preceding claim, wherein the reaction arm (46) is mounted on a shaft (44) which is itself rotatably mounted in the frame (18).

11. Apparatus as claimed in claim 10, further comprising a ratchet mechanism between the shaft (44) and the torque multiplier (42) or an adjustable gear mechanism between the shaft (44) and the torque multiplier (42).

12. Apparatus as claimed in any preceding claim, further comprising an insert (60) which is located between the reaction arm (46) and the aerofoil structure (64), adjacent to one face only of the aerofoil structure (64).

13. Apparatus as claimed in claim 12, wherein the insert (60) is adapted to engage more than one aerofoil structure (64) at a time.

14. Apparatus as claimed in any preceding claim, further comprising a component catcher (40) attached to the frame (18), adapted to catch components (64) ejected from the arcuate casing section (2).

15. Apparatus as claimed in claim 14, wherein the component catcher (40) comprises a wire net, or a plastic net, and the component catcher (40) is suspended from the frame (18).

16. A method of removing an aerofoil structure (64) from an arcuate casing section (2) of a rotary machine, the method comprising the steps of:
(a) placing a free end of a reaction arm (46) against a face of the aerofoil structure (64); and
(b) applying a substantially continuous force to the reaction arm (46), and thereby to the aerofoil structure (64) by means of a torque multiplier (42), the force being applied to the face of the aerofoil structure (64) in a substantially circumferential direction of the arcuate casing section (2).

17. A method as claimed in claim 16, further comprising interposing an insert between the reaction arm and the face of the aerofoil structure.

18. A method as claimed in claim 16 or 17, further comprising catching the aerofoil structure in a component catcher situated adjacent the arcuate casing section when the aerofoil structure is expelled from the arcuate casing section.

19. A method as claimed in claim 16, claim 17 or claim 18, further comprising arranging the arcuate casing section such that a concave side of the arcuate casing section faces to one side or downwardly during removal of an aerofoil structure.
